# EUROPEAN PATENT APPLICATION

(11) **EP 4 520 176 A1**
(43) Date of publication of application: **12.03.2025**
(21) Application number: 24196696.9
(22) Date of filing: 27.08.2024
(51) Int. Cl.: A22B 3/06

(54) **APPARATUS AND METHOD FOR PROCESSING FUR ANIMALS**

(30) Priority: 08.09.2023 IT 202300018471
(71) Applicant: Agricola TRE Valli - Societa' Cooperativa, 37142 Verona (IT)
(72) Inventor: DAL BOSCO, Angelo, 37142 VERONA (IT)
(74) Representative: Anselmi, Davide

(57) **Abstract**

An apparatus (10) for processing fur animals, in particular rabbits, installable along a conveying line of a slaughtering plant, comprises a support element (20) extending prevalently along a work axis (Y) between a first end (20a) and a second end (20b) and configured to receive the muzzle of a fur animal to be processed; a pair of electrodes (30) arranged at said second end (20b) and configured to generate an electric arc to stun the fur animal when the muzzle thereof is in contact with said pair of electrodes (30); detecting means configured to detect a stunned condition of the fur animal; wherein said apparatus comprises cutting means (40) operationally associated with said second end (20b) of said support element (20) and selectively activatable by an operator to slit the throat of the fur animal.

## Description

### Technical field

The present invention relates to an apparatus for processing fur animals, in particular intended to be operationally associated with a plant or line for processing the aforementioned animals.

More in detail, the apparatus according to the invention advantageously fits in the sector of the production and marketing of machines, equipment and implements in particular intended for slaughtering plants.

The apparatus according to the invention finds particular application in rabbit slaughtering plants.

### Prior art

The use of apparatuses and machinery in production plants or lines intended for processing, in particular slaughtering, fur animals is known, in the technical field of reference. Some examples of stunning and/or slaughtering apparatuses and/or procedures, even if they refer respectively to swines and chickens, are reported in documents CN109169799 and WO99/51103.

In particular, in the specific case of the rabbits, a plant of this type has a conformation that extends prevalently along a processing direction and comprises at least the following stations or functional groups arranged in succession to one another:
- a stunning station configured to stun a live rabbit by means of a pair of electrodes. These electrodes have a substantially tapered conformation and are configured to receive front portions of the muzzle of a live rabbit resting thereon so as to generate an electric arc between the live rabbit and the electrodes themselves. This electric arc has a predefined intensity such as to stun the aforementioned live rabbit;
- a conveyor operationally associated with the stunning station and comprising a plurality of movable hooks arranged in succession to one another along the processing direction. Each hook is configured to receive, hold in suspension and convey each freshly stunned live rabbit to the stunning station;
- a slaughtering station comprising at least one specialized operator, typically two or three specialized operators, who manually picks each rabbit from the hooks and slits, at least partially, manually the throat of the rabbit itself, for example by means of a knife or the like.

Subsequently, the slaughtered rabbit is repositioned on the movable hooks and moved along the processing direction to undergo further processing in respective operating stations, such as for example skinning (i.e. the removal of the fur) and the removal, at least partially, of the bowels.

Slaughtering plants for fur animals of the known type just briefly described have proved to be not without drawbacks in practice.

The main drawback lies in the fact that slaughtering plants of known type do not allow to achieve high quality standards of welfare for the animal to be processed. In fact, in the particular case of rabbit slaughtering, the interval of time that elapses for each live rabbit being processed to pass from the stunning station to the slaughtering station is typically comprised between 15 and 40 seconds. This interval of time is excessively long and does not allow a rapid death, in particular substantially instantaneous, of the rabbit, which is essential for the welfare of the animal.

A further drawback lies in the fact that slaughtering plants of known type have a low overall production yield (i.e. number of fur animals processed per unit of time). In fact, the processing of fur animals, and more particularly rabbits, generally requires a high number of processing steps and consequently a high number of corresponding operating stations.

In particular, some of the aforementioned processing steps, for example stunning and slaughtering, require the manual intervention of a plurality of specialized operators. This greatly limits the production capacity of the production plant or line.

In addition, the aforementioned processing steps include repetitive and psychologically demanding manual movements, performed by each operator present in the production plant for a large number of times (up to about 2400 fur animals/hour). It follows that slaughtering plants of known type are heavy on each operator and do not allow high ergonomic standards to be achieved.

### Objects of the invention

The object of the present invention is to provide a machine for processing fur animals which makes it possible to obviate and remedy, at least in part, the drawbacks of the aforementioned prior art.

A further object of the present invention is to realise an apparatus for processing fur animals which allows to process, in particular kill, fur animals in a short, in particular substantially instantaneous interval of time (e.g. in the order of fractions of a second).

A further object of the present invention is to realise an apparatus for processing fur animals that presents a high overall production yield of the plant to which it is associated.

A further object of the present invention is to realise an apparatus for processing fur animals that is ergonomic and comfortable to use by an operator.

A further object of the present invention is to realise an apparatus for processing fur animals that is structurally and functionally completely safe and reliable.

A further object of the present invention is to realise an apparatus for processing fur animals that can be used easily and quickly by an operator. A further object of the present invention is to realise an apparatus for processing fur animals having an alternative and/or improved configuration, both in constructive and functional terms, with respect to the known traditional solutions.

### Summary

All the objects, both individually and in any combination thereof, and others that will result from the detailed description that follows are reached, according to the invention, with an apparatus for processing fur animals having the characteristics indicated in independent claim 1.

The dependent claims outline particularly advantageous embodiments of the invention.

### Brief description of the drawings

Further features and advantages of the present invention will become more apparent from the illustrative and thus non-limiting description of a preferred but not exclusive embodiment of an apparatus for processing fur animals as illustrated in the appended drawings, in which:
- figure 1 shows, according to a perspective view, an apparatus for processing fur animals according to an embodiment of the invention;
- figure 2 shows, according to a further perspective view, the apparatus illustrated in figure 1 with some parts removed to better highlight others;
- figure 3 shows, according to a top plan view, the apparatus illustrated in figure 1;
- figure 4 shows, according to a longitudinal sectional view, the apparatus illustrated in figure 1;
- figure 5 shows, according to a perspective view, a functional group of the apparatus illustrated in figure 1.

With reference to the drawings, they serve solely to illustrate embodiments of the invention with the aim of better clarifying, in combination with the description, the inventive principles at the basis of the invention.

### Detailed description of the invention

With reference to the appended figures, an apparatus for processing fur animals, subject-matter of the present invention, in particular intended to be operationally associated with a plant for processing, in particular slaughtering, the aforementioned animals, has been indicated overall with number 10.

For the purposes of this description, the term "fur animals" shall be understood to mean any animal with a hair coat, such as minks, ermine, foxes, raccoons and others.

In the following description, particular reference will be made to apparatuses intended for plants or lines for processing, in particular slaughtering, rabbits. However, the apparatus 10 according to the invention can be advantageously employed for processing any fur animal, such as for example those briefly mentioned above, without thereby departing from the scope of protection of the present description.

For the purposes of this description, the term "processing" shall be understood to mean a process of slaughtering fur animals comprising at least one stunning step and at least one slaughtering step of an animal.

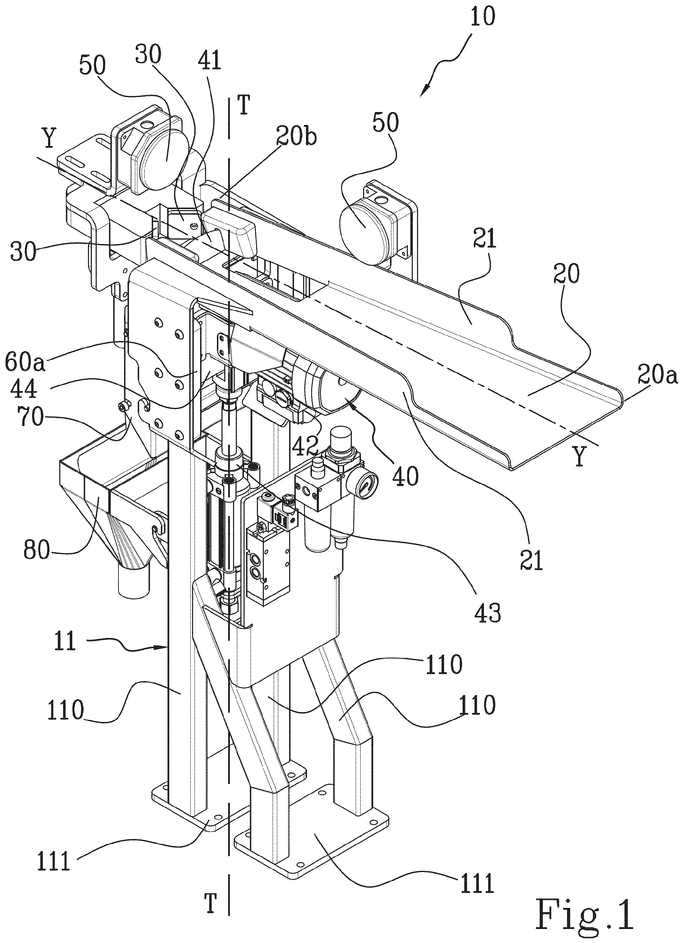

In accordance with the embodiment illustrated in figure 1, the apparatus 10 for processing fur animals, in particular rabbits, installable along a conveying line of a slaughtering plant, comprises a support element 20 extending prevalently along a work axis Y between a first end 20a and a second end 20b and configured to receive the muzzle of a fur animal to be processed.

More in detail, the support element 20 has a substantially tapered shape starting from the first end 20a towards the second end 20b, so as to substantially define a conveying channel.

Advantageously, such a tapered conformation of the support element 20 allows an easy insertion/reception of a fur animal, in particular a rabbit.

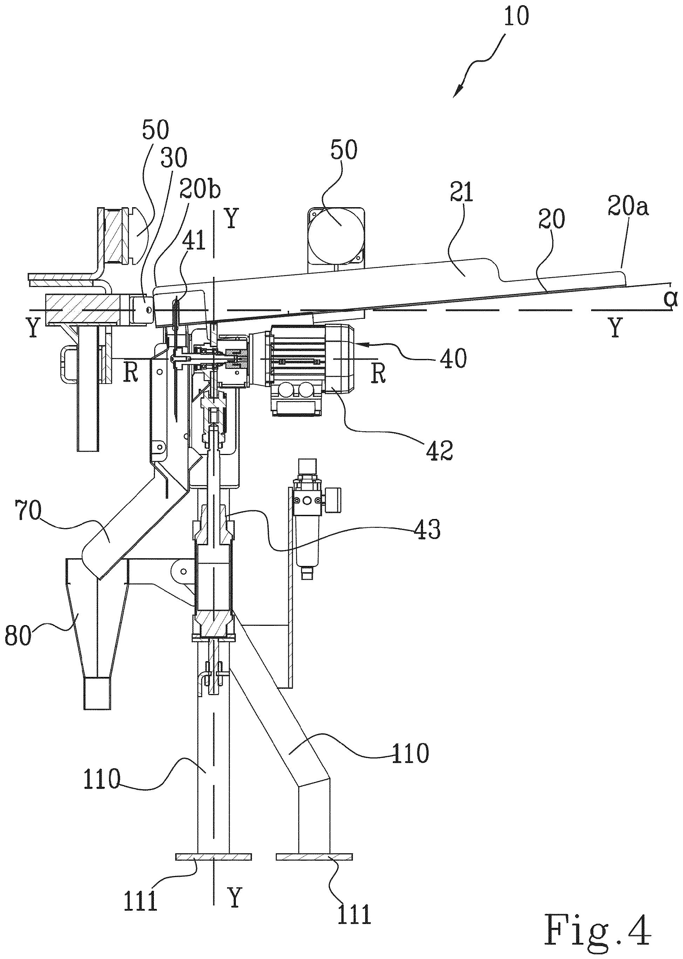

According to the embodiment illustrated in figure 1, the support element 20 is arranged substantially horizontally, i.e. with the work axis Y substantially horizontal (parallel to the ground). However, as illustrated in figure 4, the support element 20 can be arranged inclined, thus presenting an angle of inclination a with respect to a substantially horizontal direction, such as that described above.

According to one aspect of the invention, the support element 20 comprises containment side barriers 21 configured to retain the fur animal on the support element 20 during processing of the fur animal itself.

In particular, the containment side barriers 21 are made in one piece on the support element 20, that is, they are directly obtained on the support element 20 itself, for example by means of a folding process.

In this way, the support element 20 has a shape of its section that is transverse, made with respect to the work axis Y, substantially like a "U" (see figure 1).

The containment side barriers 21 contribute to defining the aforementioned conveying channel, substantially tapered starting from the first end 20a towards the second end 20b of the support element 20 (as previously mentioned).

According to the embodiment illustrated in the appended figures, the support element 20 is preferably made from a flat metal sheet, for example steel, preferably stainless steel (e.g. AISI 304, or AISI 316), and subsequently folded, at edge side portions, to create the aforementioned containment side barriers 21.

Advantageously, the support element 20 is thus at the same time mechanically rigid and resistant, as well as light and easy to assemble. In addition, this element 20 has a good resistance to corrosion, in particular when in contact with corrosive fluids such as, for example, biological fluids and acid-based substances commonly used to carry out washing and/or sanitizing of the apparatus 10.

According to one aspect of the invention, the apparatus 10 comprises a support structure 11 extending prevalently along a cutting axis T (introduced and described in more detail below) which is substantially vertical (i.e. orthogonal to the work axis Y), and being connected mechanically to the support element 20, in particular at the second end 20b.

More in detail, said support structure 11 comprises a plurality of legs 110 substantially straight and configured to arrange the support element 20 at a predefined height with respect to the ground.

For example, this height is typically defined by the reference regulations belonging to the technical sector in which the apparatus 10 is located, and in particular comprised between 920 and 985 centimetres. Advantageously, an operator uses the apparatus 10 according to the invention by adopting a substantially vertical working position (i.e. standing), and therefore comfortable and ergonomic, suitable for prolonged use of the apparatus 10 itself, for example equal to the number of hours of a work shift (e.g. 8 hours).

The support structure 11 further comprises rest feet 111 connected mechanically to the legs 110 and having a substantially plate-shaped conformation, and in particular suitable to be rested and/or fixed to the ground, in such a way as to confer stability to the apparatus 10 during its operation.

According to one aspect of the invention, the apparatus 10 further comprises a pair of electrodes 30 arranged at the second end 20b of the support element 20 and preferably operationally associated with the latter, and configured to generate an electric arc to stun the fur animal when the muzzle thereof is in contact with the same pair of electrodes 30. In other words, the positioning of the animal's muzzle between the pair of electrodes 30 allows to electrically close the circuit and, thus, allow the passage of the electric discharge adapted to stun the same animal.

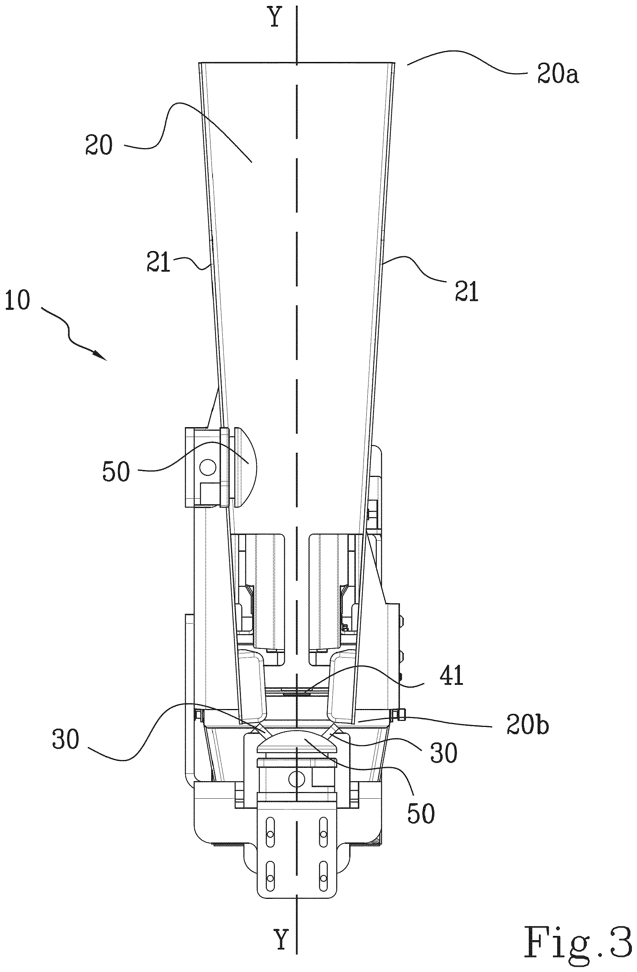

As specifically illustrated in figures 1, 2 and 3, each electrode 30 is arranged according to a wedge-shaped configuration, i.e. substantially V-shaped in such a way as to substantially form a lead-in portion for the muzzle of an animal to be processed.

Advantageously, this arrangement of the pair of electrodes 30 allows a contact between the pair of electrodes 30 itself and the muzzle of an animal to be processed that is simple, fast and free of possible manual positioning errors by an operator.

According to one aspect of the invention, each electrode of the pair of electrodes 30 has a substantially plate-shaped conformation. In other words, each electrode 30 has a preferably substantially square or rectangular shape, and preferably substantially planar.

Advantageously, the contact surface between each electrode 30 and the muzzle of an animal to be processed is wide and extensive, i.e. not of a localized point type, with a consequent greater efficiency in generating the aforementioned electric arc between the pair of electrodes 30 and the muzzle of the animal itself. This results in greater reliability of the apparatus 10 during its operation, as any incorrect contacts are reduced to a minimum thanks to the maximisation of the contact points between electrodes 30 and the animal's muzzle.

According to one aspect of the invention, the apparatus 10 further comprises detecting means (not illustrated in the appended figures) configured to detect a stunned condition of the fur animal.

Preferably, said detecting means may comprise light elements adapted to visually signal to an operator that the animal has been stunned.

Advantageously, the aforementioned detecting means allows to accurately and reliably identify a stunned condition of an animal to be processed. In particular, the animal is subjected to subsequent processing steps, such as slaughtering, only if the aforementioned stunned condition takes place correctly.

What has just been described is essential in order to achieve a high level of welfare for the animal being processed, or at least in accordance with the reference regulations of the technical sector in which the apparatus 10 is located.

According to an embodiment, the aforementioned detecting means is configured to detect the electrical absorption that occurred during the stunning step. The muzzle of the animal, in fact, can be schematized as a resistor that, placed along an electrical circuit (i.e., the electric arc generated by the pair of electrodes 30), brings about a corresponding absorption. Given that an average resistance value is known that can be associated with a muzzle of the animal, it is advantageously possible to verify that the stunning step has correctly occurred. Alternatively, it is also possible to determine the corresponding resistance value for each animal by means of special scanning apparatuses arranged upstream of the processing apparatus in accordance with the invention.

In accordance with the embodiment illustrated in the appended figures, the apparatus 10 comprises cutting means 40 operationally associated with the second end 20b of the support element 20 and selectively activatable by an operator to slit the throat of the stunned fur animal. In particular, the cutting means 40 is movable along a cutting axis T that is transverse, preferably orthogonal (see figure 4), to the work axis Y.

More specifically, the cutting means 40 is movable along the cutting axis T substantially vertically, between a rest configuration in which the cutting means 40 is arranged completely in a lowered position relative to the support element 20, and a work configuration in which the cutting means 40 protrudes at least partially from the support element 20 and is active.

In other words, the cutting means 40 is located in a position completely underlying the support element 20 and in an inactive configuration. In this way, the cutting means 40 is advantageously retracted in a safe position that does not interfere with any portion of an operator, for example a hand or a flap of clothing that could get caught thereon.

Otherwise, said cutting means 40 protrudes projectingly, in particular by a predefined amount, with respect to a base surface of the support element 20, when they are in a work configuration.

Therefore, contrary to the state of the art, in the present invention the cutting means 40 is advantageously integrated within the apparatus 10 in which the means for stunning the animal, i.e. the pair of electrodes 30, is also provided. Consequently, the aforementioned apparatus 10 is advantageously able to drastically reduce the duration of the interval of time that elapses between the stunning of the animal and the slaughtering thereof.

In addition, the apparatus 10 subject-matter of the present invention also allows to obtain further advantages:
- increased welfare for the animal during its processing;
- productivity increase;
- reduction in the number of operators for the execution of the most physically and/or psychologically demanding steps (in fact, at the state of the art, operators in charge of slaughtering - a stressful operation in itself - work for long periods of time standing, with their arms suspended frontally for processing the animals conveyed suspended along the conveying line). According to one aspect of the invention, in order to allow the aforementioned movement of the cutting means 40, the apparatus 10 comprises sliding blocks, in particular a first sliding block 60a and a second sliding block 60b, preferably arranged facing each other and connected mechanically, preferably constrained, to the support structure 11.

Preferably, the first sliding block 60a and the second sliding block 60b are substantially the same one another and preferably made of a polymeric material, e.g. polyethylene (e.g. PE1000) or any other material suitable for making sliding and creeping couplings.

More specifically, the first sliding block 60a and the second sliding block 60b extend prevalently along a direction substantially parallel to the cutting axis T and are configured to be slidably associated with the cutting means 40, so as to define a prismatic-type coupling.

In particular, the sliding coupling between the sliding blocks 60a, 60b and the cutting means 40 takes place by means of a sliding element 44, preferably interposed between the sliding blocks 60a, 60b and the cutting means 40 itself, and having a substantially plate-like shape.

Said sliding element is preferably made of a metallic material, for example steel or aluminium.

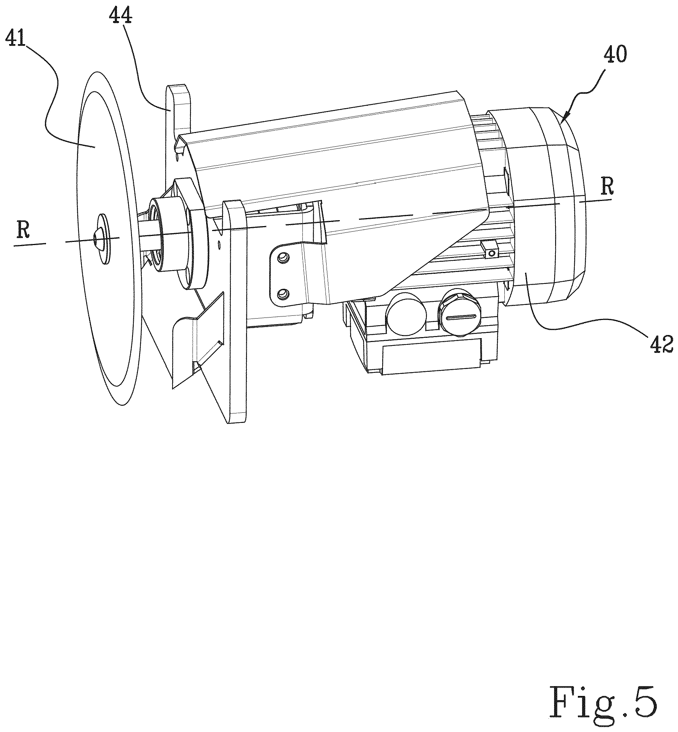

According to one aspect of the invention, in particular illustrated in figure 5, the cutting means 40 is connected mechanically, in particular mounted, on the sliding element 44. This sliding element 44 is in turn arranged interposed, in particular slidably constrained, between the first sliding block 60a and the second sliding block 60b.

In particular, the first sliding element 60a and the second sliding element 60b each have a sliding groove configured to connect, in particular get mechanically constrained, with respective edge portions of the sliding element 44, in such a way as to allow a substantially straight and reciprocating sliding of the sliding element 44 and therefore of the cutting means 40 along the grooves of the first sliding block 60a and of the second sliding block 60b.

According to one aspect of the invention, in particular illustrated in detail in figure 5, the cutting means 40 comprises a substantially circular blade 41 configured to rotate around a rotation axis R substantially parallel to the work axis Y.

The cutting means 40 also comprises an activating device 42, preferably an electric motor, for example an electric motor of the asynchronous or permanent magnet type (e.g. brushless), connected mechanically to the blade 41 and configured to rotate the blade 41 itself around the rotation axis R.

According to one aspect of the invention, the cutting means 40 further comprises an actuator 43, preferably a pneumatic cylinder, connected mechanically to the blade 41 and configured to move the blade 41 itself (and consequently also the activating device 42) along the cutting axis T between the rest configuration and the work configuration.

In particular, as illustrated in figure 4, the actuator 43 is connected mechanically to the sliding element 44, and moving the sliding element 44 consequently moves the blade 41 and the activating device 42, both mechanically mounted on the sliding element 44.

In accordance with the embodiment illustrated in figures 1, 2 and 4, the cutting means 40 performs a travel (i.e. a substantially straight displacement), along the cutting axis T in such a way as to protrude with respect to the support element 20, in particular with respect to a base/bottom portion of the support element 20 itself, by a length comprised between 20 and 40 millimetres.

According to one aspect of the invention, the apparatus 10 comprises enabling elements 50 configured to send an enabling signal to the cutting means 40 from a control unit (not illustrated in the appended figures). In particular, the control unit is configured to send the aforementioned enabling signal to the cutting means 40 when the stunned condition is detected by the detecting means.

More specifically, the control unit is configured to send the enabling signal to the cutting means 40 within a set interval of time, in particular preferably less than 10 seconds, even more preferably less than 5 seconds, from receiving a stunning signal generated by the detecting means and representing a stunned condition of the animal.

In other words, the control unit comprises a timer element that keeps the possibility of sending the enabling signal active only for a limited interval of time from the generation of the stunned condition detected by the detecting means.

According to one aspect of the invention, the aforementioned enabling elements 50 comprise two individually activatable pushbuttons. In particular, the enabling signal can be sent to the control unit when the two buttons are simultaneously activated by an operator.

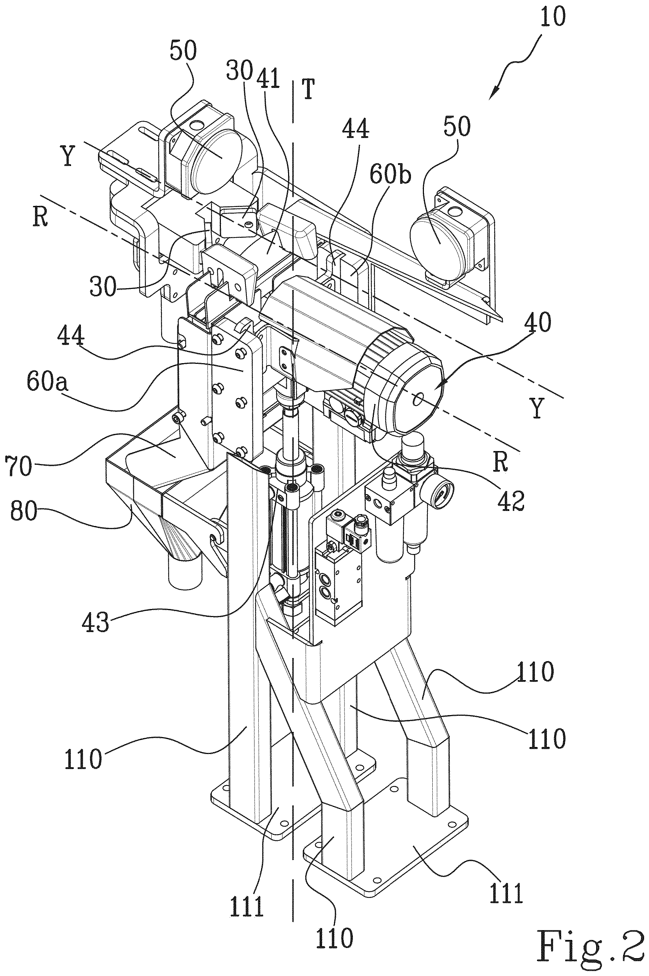

More in detail, as illustrated in detail in figures 1 and 2, a first pushbutton 50 is preferably arranged at the second end 20b of the support element 20, while a second pushbutton 50 is arranged in an intermediate position between the first end 20a and the second end 20b of the support element 20 itself.

According to one aspect of the invention, the apparatus 10 preferably comprises at least one discharge chute 70 connected mechanically to the support structure 11, arranged at the second end 20b of the support element 20 and configured to convey biological fluids, in particular blood, of the slaughtered fur animal towards a discharge direction.

In particular, according to the embodiment illustrated in figures 1-4, this discharge chute 70 extends prevalently substantially parallel to the cutting axis T (i.e. substantially vertically) in such a way as to drain and convey the biological fluids of the slaughtered fur animal that percolate under the effect of the force of gravity towards the ground.

According to one aspect of the invention, in particular illustrated in figures 1-4, the apparatus 10 further comprises at least one collection hopper 80 for collecting said biological fluids, operationally associated with the discharge chute 70 and configured to collect, for example in a collection tank (not illustrated in the appended figures) the biological fluids themselves.

As illustrated in detail in figure 4, the collection hopper 80 is arranged at a lowered position with respect to the discharge chute 70 in such a way as to collect the biological fluids that flow by gravity along the chute 70 itself. Operationally, the operation of the invention is as follows.

As illustrated in figures 1 to 4, an operator grasps a fur animal (in particular a rabbit) at the ears and legs of the animal itself, and for example coming from a conveyor.

The operator moves the fur animal along the work axis and in particular along the support element 20, so as to establish a contact between the animal's muzzle and the pair of electrodes 30.

This contact causes a stunning of the animal, which stunning is signalled to the operator by means of detecting elements. Upon the occurrence of the aforementioned stunned condition of the animal, the operator presses (for example by using his or her elbows) the two enabling elements 50 simultaneously and this activates the movement of the cutting means 40, in particular of the blade 41.

In fact, the cutting means 40 is activated along the cutting axis T, in particular in lifting from bottom to top, by means of the actuator 43. In particular, the actuator 43 (i.e. the pneumatic cylinder 43), moves the cutting means 40, from the rest configuration (i.e. inactive) in which they are in a lowered position that does not hinder or obstruct the passage along the support element 20, to the work configuration (i.e. active) in which they are in a raised and protruding position with respect to the support element 20 itself.

More specifically, the actuator 43 is connected mechanically to the sliding element 44 to which the blade 41 and the activating device 42 are in turn mechanically mounted. Therefore, the movement of the cutting means 40 takes place by means of the movement of the sliding element 44.

The latter is mechanically constrained at its own edge portions, in particular by means of a prismatic-type sliding coupling, to the first sliding block 60a and to the second sliding block 60b.

Once the blade 41 slits the fur animal's throat, the cutting means is lowered along the cutting axis T, and returns to its rest configuration. At the same time, the operator hangs the slaughtered fur animal on a conveyor, which moves the animal itself along the conveying line of the slaughtering plant, and the cycle is repeated by picking a further fur animal to be processed. The present invention also relates to a plant for processing fur animals, of which for simplicity's sake the same numerical references will be maintained.

More in detail, the plant comprises a conveyor configured to convey a plurality of fur animals, in particular rabbits, from a loading zone arranged at the entry of the plant, to an unloading zone arranged at the exit of the plant itself.

The plant further comprises at least one apparatus 10 for processing fur animals in accordance with one or more of the features described above. The present invention also relates to a method for processing fur animals, of which for the sake of simplicity of exposure the same numerical references will be maintained.

The method comprises the following operating steps:
- picking up a fur animal;
- arranging the fur animal on a support element 20 extending along a work axis Y thereof;
- bringing the muzzle of the fur animal into contact with a pair of electrodes 30 arranged at a second end 20b of the support element 20 so as to stun the fur animal;
- actuating cutting means 40 operationally associated with the second end 20b of the support element 20 so as to slaughter the fur animal;
- arranging the slaughtered fur animal on the conveyor.

The processing method also comprises the preliminary step of setting up an apparatus 10 in accordance with the above characteristics.

## Claims

1. An apparatus (10) for processing fur animals, in particular rabbits, which is installable along a conveying line of a slaughtering plant, comprising:
- a support element (20) extending prevalently along a work axis (Y) between a first end (20a) and a second end (20b) configured to receive the muzzle of a fur animal to be processed;
- a pair of electrodes (30) arranged at said second end (20b) and configured to generate an electric arc to stun the fur animal when the muzzle thereof is in contact with said pair of electrodes (30);
- detecting means connected to said pair of electrodes (30) and configured to detect a stunned condition of the fur animal;
**characterized in that** it comprises cutting means (40) operationally associated with said second end (20b) of said support element (20) and selectively activatable by an operator to slit the throat of the stunned fur animal, wherein said cutting means (40) is movable along a cutting axis (T) that is transverse, preferably orthogonal to said work axis (Y), wherein said cutting means (40) is movable along said cutting axis (T), between a rest configuration in which said cutting means (40) is arranged completely in a lowered position relative to said support element (20), and a work configuration in which said cutting means (40) protrudes at least partially from said support element (20) and is active.

2. The apparatus (10) according to any one of the preceding claims; wherein said cutting means (40) comprises:
- a blade (41) that is substantially circular and configured to rotate around a rotation axis (R) that is substantially parallel to said work axis (Y);
- an activating device (42), preferably an electric motor, connected mechanically to said blade (41) and configured to rotate said blade (41) around said rotation axis (R).

3. The apparatus (10) according to claim 2, wherein said cutting means (40) comprises an actuator (43), preferably a pneumatic cylinder, connected mechanically to said blade (41) and configured to move said blade (41) along said cutting axis (T) between said rest configuration and said work configuration.

4. The apparatus (10) according to any one of the preceding claims, wherein said cutting means (40) performs a stroke along said cutting axis (T) so as to protrude from said support element (20) by a length comprised between 20 and 40 millimetres.

5. The apparatus (10) according to any one of the preceding claims, wherein each electrode of said pair of electrodes (30) has a substantially plate-shaped conformation.

6. The apparatus (10) according to any one of the preceding claims, wherein said support element (20) comprises containment side barriers (21) configured to retain said fur animal on said support element (20) during processing of said fur animal.

7. The apparatus (10) according to any one of the preceding claims, comprising enabling elements (50) configured to send an enabling signal of said cutting means (40) to a control unit, said control unit being configured to send said enabling signal to said cutting means (40) when said stunned condition is detected by said detection means.

8. The apparatus (10) according to claim 7, wherein said control unit is configured to send said enabling signal to said cutting means within a set interval of time from receiving a stunning signal generated by said detecting means and representing said stunned condition.

9. The apparatus (10) according to claim 7 or 8, wherein said enabling elements comprise two individually activatable pushbuttons;
said enabling signal being sendable to said control unit when said two pushbuttons are simultaneously activated.

10. A plant for processing fur animals comprising:
- a conveyor configured to convey a plurality of fur animals from a loading zone arranged at the entry of said plant to an unloading zone arranged at the exit of said plant;
- at least one apparatus (10) for processing fur animals, according to one or more of claims 1 to 9.

11. A method for processing fur animals, comprising the following operating steps:
- picking up a fur animal;
- arranging the fur animal on a support element (20) extending along a work axis (Y) thereof;
- bringing the muzzle of said fur animal into contact with a pair of electrodes (30) arranged at a second end (20b) of said support element (20) so as to stun the fur animal;
- actuating cutting means (40) operationally associated with said second end (20b) of said support element (20) so as to slaughter said fur animal;
- arranging said slaughtered fur animal on a conveyor.

12. The processing method according to claim 13, comprising the preliminary step of setting up an apparatus (10) according to any one of claims 1 to 9.
